# EUROPEAN PATENT APPLICATION

(11) **EP 1 653 125 A2**
(43) Date of publication of application: **03.05.2006**
(21) Application number: 05292292.9
(22) Date of filing: 28.10.2005
(51) Int. Cl.: F16H 59/10, F16H 61/28

(54) **Operating position select device for automatic transmission**

(30) Priority: 29.10.2004 JP 2004315695
(71) Applicant: Calsonic Kansei Corporation, Tokyo 164-8602 (JP)
(72) Inventor: Sato, Yutaka c/o Calsonic Kansei Corporation, Tokyo 164-8602 (JP); Osamura, Kensuke c/o Calsonic Kansei Corporation, Tokyo 164-8602 (JP); Hirota, Yukitsugu c/o Calsonic Kansei Corporation, Tokyo 164-8602 (JP)
(74) Representative: Intes, Didier Gérard André

(57) **Abstract**

An operating position select device (1) has a select lever unit (100), a mode shift unit (500) to shift operation modes of the automatic transmission (5), and an assist actuator (200, 2) controlled by a control unit (3). A first connecting member (13) of a select lever (11) and a second connecting member (17) of the mode shift unit (500) are relatively movable to a limit amount to each other and integrally movable beyond the limit amount with each other. The actuator (200, 2) is controlled to decrease a relative displacement of the members (13, 17). When the turn-on of an ignition key is detected, a start-up threshold value is used for judging the assist control and set larger than a normal value for a predetermined period to prevent miss-assist control when a driver touches the lever (11).

## Description

The present invention relates to an operating position select device for an automatic transmission by which a driver can select by operating a select lever one of select mode positions corresponding to a plurality of operation modes of the automatic transmission.

An operating position select device for an automatic transmission of this kind is disclosed in Japanese patent laying-open publication No. (Tokkaihei) 9-323559. This select device includes a select lever unit disposed near a driver's seat in a passenger compartment and a mode shift unit mounted on an automatic transmission. The select lever unit has a select lever manually operated by a driver and is connected with the mode shift unit by a connecting mechanism, such as a control cable, or a connecting linkage, which transmits an operating force applied on the select lever by the driver to the mode shift unit to shift operation modes of the automatic transmission.

The conventional art, however, has a problem that the select lever unit needs a long select lever in order to operate it without a large operating force of the driver, which reduces design freedom concerning an installation location of the select lever unit and/or a layout of a passenger compartment.

This reason comes from the fact that a length of the select lever is determined so that a driver can easily operate the select lever and its operating torque must overcome frictional resistance of the connecting mechanism and the like. Namely, the operating torque, generated by the operating force on the select lever, has to be larger than torque caused by the sum of the frictional resistance in the connecting mechanism and resistance generated when a detent pin, which moves with the select lever, gets over a cam top portion of a detent plate during select operation, although the operating force of the driver is limited to a certain extent. Accordingly, to satisfy both of the above requirements the select lever needs to be longer than a certain length, typically to be 350 mm.

Another operating position select device for an automatic transmission of this kind is disclosed in Japanese patent laying-open publication (Tokkai) No. 2003-97694. This select device is, what is called, a shift-by-wire type. It has a select lever manually operated by a driver, a select position detector for detecting a position of the select lever, a mode shift unit mounted on an automatic transmission for shifting its operation modes, an electric motor for driving a mode shift unit, and a control unit for controlling the electric motor based on an output signal from the detector.

This select device is suitable for shortening a length of the select lever and expanding design freedom for its installation location and/or layout of a passenger compartment, while the select device lacks a mechanical connection between the select lever and the mode shift unit. This lack of the mechanical connection results in a problem that the mode shift unit can not be shifted despite of operating the select lever in case of electrical failure such that an electric wire is broken, or the select position detector or the control unit fails.

It is, therefore, an object of the present invention to provide an operating position select device for an automatic transmission which overcomes the foregoing drawbacks and can expand design freedom concerning layout of a passenger compartment and/or an installation location of a select lever unit, and drive a mode shift unit despite electric failure of the operating position select device, providing an on-demand favorable select-lever operating feeling in a select operation.

According to the first aspect of the present invention there is provided an operating position select device for an automatic transmission whose operation modes are shiftable, the operating position select device comprising: a select lever unit having a select lever that is operated by a driver between a plurality of select positions corresponding to the operation modes; a first connecting member mechanically connected with and movable with the select lever; a mode shift unit mounted on the automatic transmission to shift operation modes of the automatic transmission; a second connecting member mechanically connected with the mode shift unit to shift positions thereof, the second connecting member being relatively movable to a limit amount with respect to the first connecting member and integrally movable beyond the limit amount with the first connecting member; a relative displacement sensor detecting a relative displacement between the first connecting member and the second connecting member; an ignition state detecting means detecting turn-on of an ignition key, an assist actuator supplying assist force to the mode shift unit; a drive command value calculating means calculating a drive command value for driving the assist actuator based on the relative displacement so that the relative displacement is reduced; a drive permitting means for permitting to start drive of the assist actuator when the relative displacement exceeds a start-up threshold value; and a start-up threshold value setting means setting the start-up threshold value so that the start-up threshold value is kept larger than a normal start-up threshold value for a predetermined period after the ignition state detecting means detects the turn-on of the ignition key and then the start-up threshold value lessens to the normal start-up threshold value after the predetermined period.

Therefore, these operation position select devices can expand design freedom concerning layout of a passenger compartment and/or an installation location of a select lever unit. In addition, it can drive the mode shift unit despite electric failure of the operating position select device, providing an on-demand favorable select-lever operating feeling in a select operation.

The objects, features and advantages of the present invention will become apparent as the description proceeds when taken in conjunction with the accompanying drawings, in which:
FIG. 1 is a schematic diagram showing a structure of an automatic transmission with an operating position select device of a first embodiment according to the present invention;
FIG. 2 is an enlarged perspective view showing a select lever unit and an assist actuator which are used in the operating position select device shown in FIG. 1;
FIG. 3 is an enlarged perspective view showing a mode shift unit with a detent mechanism which is used in the operating position select device shown in FIG. 1;
FIG. 4 is a control block diagram of a control unit and its peripheral equipment that are used in the operating position select device shown in FIG. 1;
FIG. 5 is a flowchart of assist control process executed in the control unit shown in FIG. 4 for controlling the assist actuator during a select operation;
FIG. 6 is a characteristic diagram showing relationships of operating reaction force acting on a select lever and a cam profile of the detent mechanism with respect to an operating angle of the select lever, when the select lever is shifted from a P position to an R position without assist force of the assist actuator;
FIG. 7 is a time chart of an operating angle, an assist angle and a variation between them when the select lever is shifted from the P position to the R position;
FIGS. 8A to 8D are schematic diagrams showing successive states of the select lever and a manual plate lever of the mode shift unit in a select operation;
FIG. 9 is a flowchart of a start-up threshold setting process executed by the control unit;
FIG. 10 is a time chart showing values of start-up threshold values and high-frequency components of a detected relative displacement, an actual relative angle and an ignition state in the first embodiment;
FIG. 11 is a control block diagram of a control unit and its peripheral equipment that are used in an operating position select device of a second embodiment according to the present invention;
FIG. 12 is a flowchart showing a start-up setting process executed in the control unit shown in FIG. 11;
FIG. 13 is a time chart showing values of start-up threshold values and the high-frequency components of the detected relative displacement, the actual relative angle, the ignition state and an engine state in the second embodiment;
FIG. 14 is a control block diagram of a control unit and its peripheral equipment that are used in an operating position select device of a third embodiment according to the present invention;
FIG. 15 is a flowchart showing a start-up setting process executed in the control unit shown in FIG. 14;
FIG. 16 is a time chart showing values of stat-up threshold values and the high-frequency components of the detected relative displacement, the actual relative angle, the ignition state and a brake state in the third embodiment;
FIG. 17A and 17B are data tables for determining the start-up threshold value, FIG. 17A is a TABLE 1 used when brake is applied, and FIG. 17B is a TABLE 2 used when the brake is released;
FIG. 18 is a control block diagram of a control unit and its peripheral equipment that are used in an operating position select device of a fourth embodiment according to the present invention;
FIG. 19 is a flowchart showing a start-up setting process executed in the control unit shown in FIG. 18;
FIG. 20 is a time chart showing values of stat-up threshold values and the high-frequency components of the detected relative displacement, the actual relative angle, the detected relative angle and the ignition state in the fourth embodiment;
FIG. 21 is a control block diagram of a control unit and its peripheral equipment that are used in an operating position select device of a fifth embodiment according to the present invention;
FIG. 22 is a side view of a gate plate of a gate mechanism used in a select lever unit of the fifth embodiment;
FIG. 23 is a schematic diagram showing a structure of an automatic transmission with an operating position select device of a sixth embodiment according to the present invention;
FIG. 24 is a schematic diagram showing a structure of an automatic transmission with an operating position select device of a seventh embodiment according to the present invention; and
FIG. 25 is an enlarged perspective view showing an assist actuator used in the operating position select device shown in FIG. 24.

Throughout the following detailed description, similar reference characters and numbers refer to similar elements in all figures of the drawings, and their descriptions are omitted for eliminating duplication.

An operating position select device of a first preferred embodiment according to the present invention will be described with reference to the accompanying drawings.

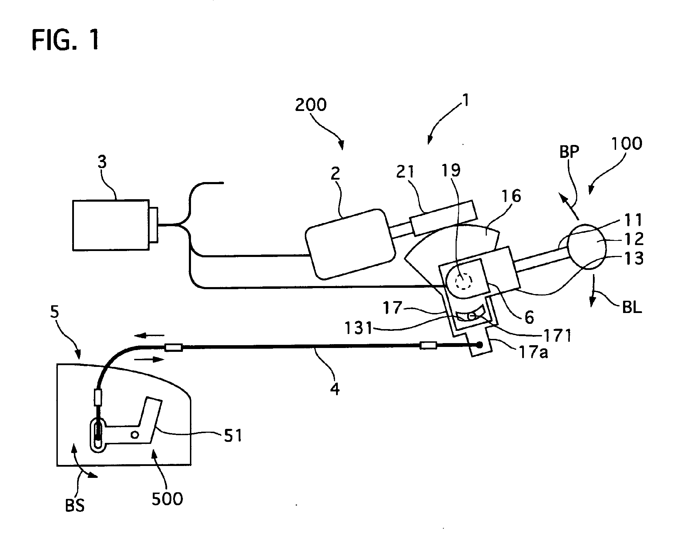

Referring to FIG. 1 of the drawing, there is shown an automatic transmission 5 and an operating position select device 1 for controlling the transmission 5.

The automatic transmission 5 is a conventional multi-speed transmission with a plurality of planetary gear sets, not shown, and is shiftable among a plurality of operation modes, for example, a parking mode, a reverse drive mode, a neutral mode, a forward drive mode, and a forward low gear drive mode.

The automatic transmission 5 is provided with the operating position select device 1, which is able to shift the operation modes to a desired operation mode by manually selecting a select lever 11 of the select device 1.

The operating position select device 1 includes the select lever unit 100 manually operated by a driver, a mode shift unit 500 mounted on the automatic transmission 5, a control cable 4 transmitting operating force between the select lever 11 and the mode shift unit 500, an assist actuator 200 for assisting a select operation of the select lever 11, and a control unit 3 for controlling the assist actuator 200.

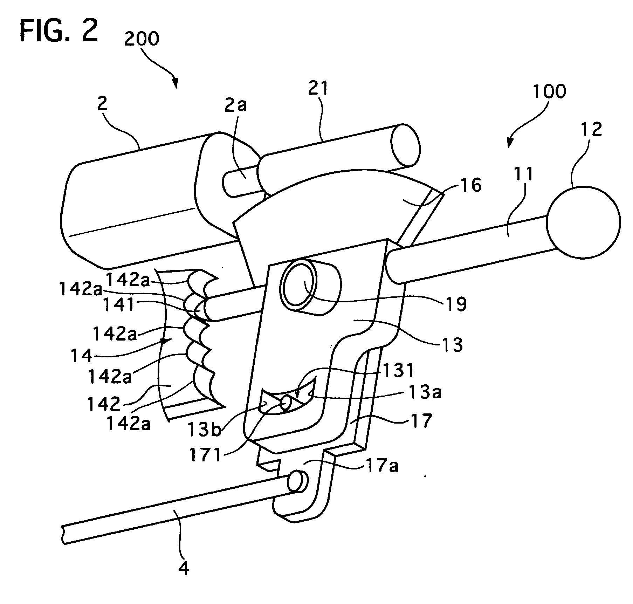

The select lever unit 100 is arranged at a center console, an instrumental panel or the like within arm's reach of the driver. The unit 100 is equipped with the select lever 11 operatable by the driver and a checking mechanism 14, shown in FIG 2, for ensuring the lever 11 to be kept in a selected mode position. The lever 11 is swingably supported by a supporting shaft 19 supported by a not-shown support plate fixed to a vehicle body side, and on its top portion, a knob 12 is mounted for grip of a hand of the driver.

The select lever 11 is set to be approximately 100 mm in length in this embodiment, approximately 250 mm shorter than a conventional type select lever. The lever 11 is movable by the driver swingably in a first direction toward a P position as indicated by an arrow Bp in FIG. 1 and in a second direction, opposite to the first direction, toward an L position as indicated by an arrow BL.

The operation modes of the automatic transmission 5 can be shifted by moving the select lever 11 in one of select positions: the P position corresponding to the parking mode of the automatic transmission 5, an R position corresponding to the reverse drive mode, an N position corresponding to the neutral mode, a D position corresponding to the forward drive mode, and the L position corresponding to the forward low geared drive mode.

As shown in FIG 2, the select lever 11 is integrally fixed to a first connecting member 13 at its intermediate portion. The first connecting member 13 is swingably rotatable around the supporting shaft 19 and formed with a play opening 131 in an arc shape. This play opening 131 is formed, being centered on the supporting shaft 19.

The shaft 19 also swingably supports a second connecting member 17, which is lapped over the first connecting member 13. The second connecting member 17 is provided with a worm wheel portion 16 at its top end portion and an attachment portion 17a at its bottom end portion. The worm wheel portion 16 is in mesh with a worm 21 fixed on an output shaft 2a of an electric motor 2 of the assist actuator 200, and the attachment portion 17a is connected with one end portion of the control cable 4.

The second connecting member 17 is further provided at its intermediate portion with a projection 171 inserted in the play opening 131 of the first connecting member 13 so that the projection 171 can move relative to the opening 131 in a limited travel range, where the projection 171 does not contact with a wall portion 13a or 13b forming the play opening 131. In other words, the first and second connecting members 13 and 17 can move independently from each other in the limited travel range where the projection 171 is not in contact with the wall portion 13a or 13b of the play opening 131, while they moves integrally with each other out of the range, the projection 171 contacting with the wall portion 13a or 13b.

The checking mechanism 14 includes a check plate 142 in a wave shape with five bottom portions 142a, which are formed corresponding to the select mode positions P, R, N, D, and L. The check plate 142 is fixed to the vehicle body side and pressed by a check pin 141, which is extractable from and retractable into a not-shown hole formed in the first connecting member 13, being urged by a not-shown spring arranged in the hole. The select lever 11 is kept being positioned in a selected mode position by engagement of the check pin 141 and the bottom portion 142a corresponding thereto, regardless of vibration force transmitted from the vehicle body and others.

The assist actuator 200, as shown in FIGS. 1 and 2, includes the electric motor 2 with reduction gears for reducing rotation speed of the output shaft 2a of the motor 2, the worm 121 formed on the outer peripheral surface of the output shaft 2a and meshing with worm wheel 14. The electric motor 2 is controlled by the control unit 3 so as to apply assist force to the second connecting member 17 or rest.

As shown in FIG. 1, at the supporting shaft 19, there is provided a relative angle sensor 6 for detecting a relative angle between the first connecting member 13 and the second connecting member 17, and outputs a relative angle signal to the control unit 3. The relative angle sensor 6 acts as a relative displacement sensor of the present invention.

The mode shift unit 500 is constructed to shift the operation modes of the automatic transmission 5 according to an operation of the select lever 11.

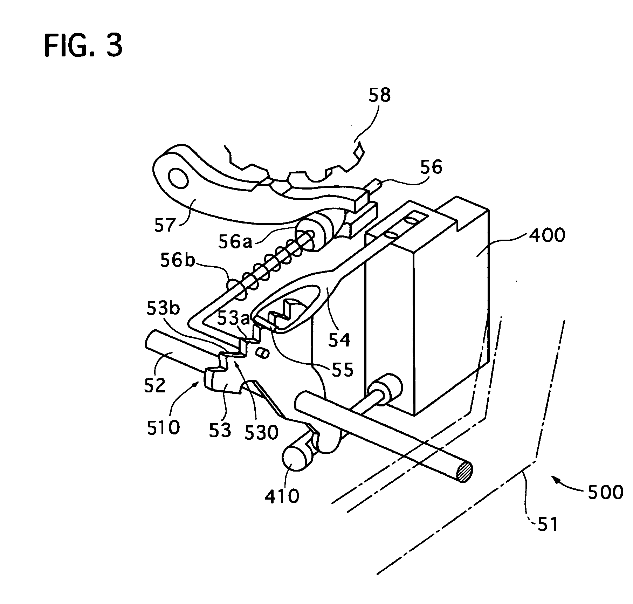

Referring to FIGS. 1 and 3 of the drawings, the mode shift unit 500 has a manual plate lever 51 and a detent mechanism 510 for keeping the lever 51 in a position selected by the select lever 11.

The manual plate lever 51 is integrally fixed at its intermediate portion with a rotary shaft 52, and connected with the other end portion of the control cable 4 at its one end portion, so that the second connecting member 17 can rotate the rotary shaft 52 relative to a transmission case of the transmission 5 through the cable 4 according to a select operation of the select lever 11. Incidentally, the rotary shaft 52 is integrally fixed to a detent plate 53 of the detent mechanism 510, so that they rotate together with each other.

The detent mechanism 510 includes the detent plate 53 having a cam 530 on its top portion, a detent pin 55 to be pressed onto the cam 530, and a spring plate 54 acting its spring force on the pin 55.

The detent plate 53 is mechanically connected at its bottom portion with a valve spool 410 of a not-shown manual valve disposed in a control valve unit 400 of the automatic transmission 5 so as to move the spool 410 according to a selected position. The detent plate 53 is formed on its upper portion with the cam 530 having six top portions 53a and five bottom portions 53b. Each bottom portion 53b is arranged between the adjacent top portions 53a and corresponds with one of the five operation modes of the automatic transmission 5.

The cam 530 is pressed by the detent pin 55 that is urged by the spring plate 54. The spring plate 54 is mounted at its one end portion on the control valve unit 400 and supports the detent pin 55 at its other end portion. The detent plate 53 is kept positioned by engagement of the detent pin 55 and the selected bottom portion 53b, thereby detaining the valve spool 410 in the correspondent position.

The detent plate 53 is also coupled at its cam side portion with a parking rod 56 having a wedge 56a. The wedge 56a is mounted on and movable along the rod 56, and formed with a tapered surface to press a parking pawl 57, when the wedge 56a advances, toward a parking wheel 58 united with an output shaft of the automatic transmission 5. The wedge 56a is biased by a coil spring 56b so that it may advance to apply its force to the pawl 57 and boost engagement of the pawl 57 and the parking wheel 58 when the select lever 11 is shifted to the P position. This engagement of the pawl 57 and the wheel 58 results in locking drive wheels, not shown, for parking a motor vehicle.

As shown in FIG 1, the control unit 3 is electrically connected to a not-shown battery, the motor 200, and the relative angle sensor 6. The control unit 3 receives the relative angle signal from the relative angle sensor 6 so as to drive the electric motor 2 under pulse width modulation (PWM) control.

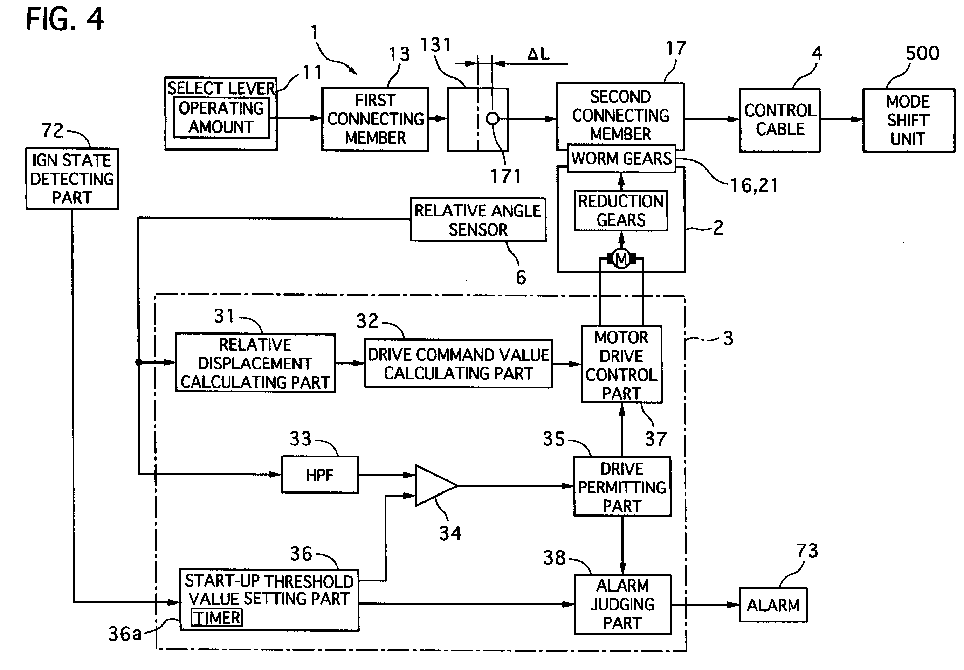

FIG 4 shows a control block diagram of the control unit 3 and its related units.

The control unit 3 includes a relative displacement calculating part 31, a drive command value calculating part 32, a high pass filter (HPF) 33, a comparator 34, a drive permitting part 35, a start-up threshold setting part 36, a motor drive control part 37, and an alarm judging part 38.

The relative displacement calculating part 31 is electrically connected to the relative angle sensor 6 to receive a relative angle signal, and outputs a relative angle signal.

The drive command value calculating part 32 is electrically connected to the relative displacement calculating part 31 to receive the relative displacement signal and calculates a drive command value based thereon, then outputting a drive command value signal. The drive command value is set to lessen the detected relative displacement. This calculation is executed under Proportional-Integral-Derivative (PID) control for example.

The high pass filter 33 is electrically connected to the relative angle sensor 6 to receive the relative angle signal, and passes only high-frequency components of the relative angle signal. That is, the filter 33 picks up a high speed part of the detected relative angle and attenuates its low speed part. Gain used in this filter 33 is set to be larger than zero (-∞ dB). The filter 33 is constructed by an electronic circuit or software. When the software is used, its transfer function is set to be (1+2τs) / (1+τs) for example, where τ is time and s is a Laplace operator. The filter 33 is set such that the high-frequency part of the relative angle can exceed a normal start-up threshold value even when the relative angle changes slowly.

The comparator 34 is electrically connected to the high pass filter 33 and the start-up threshold value setting part 36 to receive the high-frequency components of the relative angle signal and a start-up threshold value signal, respectively. Then, the comparator 34 compares them and outputs a comparative result signal.

The drive permitting part 35 is electrically connected to the comparator 34 to receive the comparative result signal to outputs a drive permission signal when the comparative result signal indicates that the high-frequency components of the relative angle signal exceeds the start-up threshold value signal. The drive permitting part 35 acts as a drive permitting means of the present invention.

The start-up threshold value setting part 36 is electrically connected to an ignition state detecting part 72 to receive an ignition state signal and output the start-up threshold value signal. The setting part 36 is provided with data tables of start-up threshold values, which will be described in detail later, and a timer 36a for counting time when it receives an ignition state signal indicating turn-on of an ignition key. The start-up threshold value is set based on the time so that it becomes larger when turn-on of the ignition key is detected and then is reduced gradually to the normal start-up threshold value. The start-up threshold value setting part 36 acts as a start-up threshold value setting means of the present invention.

The ignition state detecting part 72 detects a shift of power supply from OFF to ON. If an ignition relay or the like is provided on a motor vehicle, it may be also used as the ignition state detecting part 72. Another control unit may be used if its output signal is capable of indicating the shift of the power supply. The ignition state detecting part 72 acts as an ignition state detecting means of the present invention.

The motor drive control part 37 is electrically connected to the drive command value calculating part 32 and the drive permitting part 35 to receive the drive command value signal and the drive permission signal respectively. When the control part 35 receives the drive command value signal and the drive permission signal, it outputs a motor drive current determined based on the drive command value signal to drive the motor 2.

The alarm judging part 38 is electrically connected to the start-up threshold value setting part 36 to receive the set-up threshold value signal. The judging part 38 judges whether or not the start-up threshold value is set to be larger according to the turn-on of the ignition key, and outputs an alarm signal to an alarm 73 when its judgment is YES. The alarm 73 is constituted of a speaker, a flasher unit, and others for alerting a driver a start of the assist control in a large start-up threshold value state.

An operation of the operating position select device 1 of the first embodiment will be described.

In the select device 1, when the select lever 11 is shifted by a driver, it moves together with the first connecting member 13 and thereby changes its operating angle. According to this movement of the first connecting member 13, the wall portions 13a and 13b move relative to the projection 171 of the second connecting member 17, changing clearances between the wall portion 13a and the projection 171 and between the wall portion 13b and the projection 171. However, they do not contact with each other when the driver moves the lever 11 at normal select operation speed and his or her motor vehicle is on a substantially flat road, since the second connecting member 17 is driven by assist force of the motor 2 so as to follow the first connecting member 13.

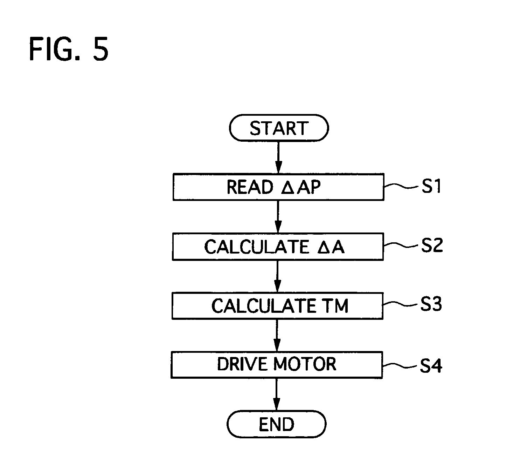

FIG 5 shows a flowchart of an assist control process executed in the control unit 3 in order to control the motor 2 when the select lever 11 is operated by a driver.

At step S1, the relative angle sensor 6 detects a relative angle ΔAP between the first connecting member 13 and the second connecting member 17, outputting a relative angle signal, and then the flow goes to step S2.

At the step S2, the relative displacement calculating part 31 receives the relative angle signal from the relative angle sensor 6 to calculate a variation ΔA, and then the flow goes to step 3. The variation ΔA is obtained based on a difference between the detected relative angle ΔAP and a middle point, where the middle point is set at a position dividing a relative displacement between the first and second connecting members 13 and 17 substantially into halves when the select lever 11 is positioned in one of the select positions, for example the P position in this embodiment and it is not touched by the driver. This calculation of the variation ΔA is needed for removing assembly errors or a different output level of the relative angle sensor 6.

The first and second connecting members 13 and 17, the cable 4, the sensor 6 and/or the others are desirably adjusted so that the middle point is at or near the center point of the play opening 131 and accordingly the projection 171 can move relative to the wall portion 13a and 13b in the both select direction substantially the same travel amounts from a position where the lever 11 is not operated and not touched.

In the embodiments including this one, the variation ΔA is treated to be zero, obtained by the adjustment when the lever 11 is positioned in the P position and not touched, for easy understanding. Therefore, the variation ΔA is substantially equal to the relative angle ΔAP, and ΔA is used for the relative displacement between the first and second connecting members 13 and 17.

The first and second connecting members 13 and 17, the cable 4, the sensor 6 and/or the others are desirably adjusted so that the middle point is at or near the center point of the play opening 131 and accordingly the projection 171 can move relative to the wall portion 13a and 13b in the both select direction substantially the same travel amounts from a position where the lever 11 is not operated and not touched.

In the embodiments including this one, the variation ΔA becomes zero by the adjustment when the lever 11 is positioned in the P position and not touched, for easy understanding. Therefore, the variation ΔA is substantially equal to the relative angle ΔAP.

At the step S3, the drive command value calculating part 32 calculates a drive command value TM based on the variation ΔA to output a drive command value signal, and then the flow goes to step S4.

At the step S4, the motor drive control part 37 outputs a motor drive electric current, determined based on the drive command value signal, to the motor 2, thereby the motor 2 applying assist force to the manual plate lever 51 through the second connecting member 17 and the cable 4, and then the flow ends.

The drive command value TM is determined by allowing for reaction force caused by the detent mechanism 510 and others.

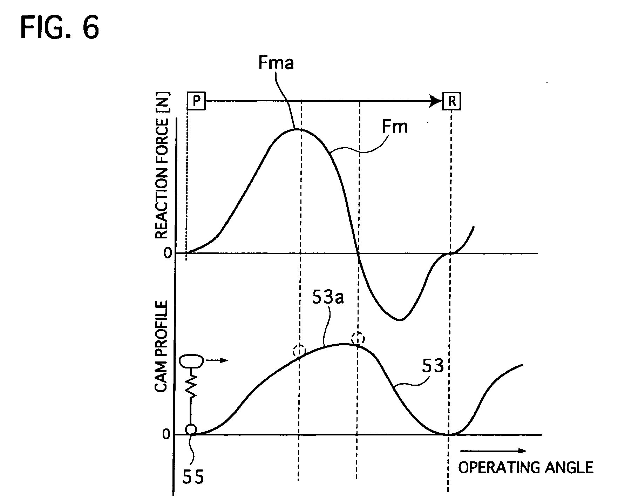

FIG 6 is a basic target reaction-force table used in the assist process and shows characteristic relationships of operating reaction force Fm acting on the select lever 11, and a cam profile of the detent mechanism 510 with respect to the operating angle, respectively, during the select operation from the P position to the R position.

The operating reaction force Fm is calculated in advance by using operating select torque detected by a torque sensor in a case where the motor 15 is not driven in the select operation. The reaction force Fm is generated by resultant force from the sum of friction force caused by the cable 4, inertia force of the motor 2, spring force of the detent mechanism 510, and others.

The reaction force Fm increases in a direction opposite to the operating direction of the lever 11 as a function of an operating angle A_{OP} of the first connecting member 13 and reaches its peak Fma before the detent pin 55 reaches the top portion 53a of the cam 530 formed on the detent plate 53, and then decreases with an increase in the angle in this pullback zone.

Specifically, in the pull-back zone, the reaction force Fm acts on the lever 11 against the operating force inputted by the driver until the highest position of the cam 530, because the detent plate 53 is biased by the spring force of the spring plate 54 in a direction opposite to the operating direction. The larger the deformation amount of the spring plate 54 becomes in the pull-back zone, the further the lever 11 moves in the operating direction. Note that the operating force in the opposite direction is affected by not only the deformation amount of the spring plate 54, but also the cam profile of the cam 530. The above-described decrease of the resistance force Fm results from a slight slope of the cam 530.

In the pull-back zone, the operating force inputted from the lever 11 needs to overcome the reaction force Fm generated by the spring force of the spring plate 54 and the cam profile, in order to move the lever 11 in the operating direction.

In the highest position where the detent pin 55 is on the peak of the cam 530, the reaction force Fm acting on the lever 11 becomes zero due to its cam profile, although the spring plate 54 is deformed to the maximum degree.

After the detent pin 55 passes over the peak of the top portion 53a, the spring plate 54 starts to reduce its deformation amount until the pin 55 reaches the bottom portion 53b of the cam 530 corresponding to the R position.

In this pull-in zone, the detent plate 53 is pressed by the spring plate 54 in the operating direction, so that the lever 11 is assisted to move forward by the reaction force Fm. Accordingly, the select lever 11 is propelled by the reaction force Fm, increasing at first and then decreasing, in such a way that the lever 11 is pulled into the bottom portion 53b corresponding to the R position.

Therefore, the operating force to be applied from the lever 11 needs to be larger than and overcome the reaction force Fm shown in FIG 6 in order to manually move the lever 11 for a select operation without assist force of the motor 2.

A more detail assist control will be described on the focus of the relationship between the projection 171 and the wall portions 13a and 13b.

In a stationary state when the select lever 11 is not operated, the projection 171 provided on the second connecting member 17 is located at the middle point, corresponding to a substantial center point of the play opening 131 formed on the first connecting member 13, dividing the opening 131 by the projection 171 to form a clearance at both adjacent sides of the projection 171.

In order to shift the mode shift unit 500 of the automatic transmission 5, the driver needs to operate the select lever 11. This select operation of the lever 11 causes the first connecting member 13 to be rotated therewith, because they are integrally connected with each other. At a first stage of this operation, the play opening 131 moves relative to the projection 171, which in not mechanically connected with the first connecting member 13 at this stage, to change a clearance between the wall portions 13a and 13b of the opening 131 and the projection 171. In other words, a relative angle between the first and second connecting members 13 and 17 begins to change from their stationary state.

This relative angle during the select operation is detected by using the relative angle sensor 6, and a motor drive electric current is produced based on the relative displacement ΔA so as to drive the motor 2.

The motor 2 is supplied with the current to rotate the second connecting member 17 in the same rotating direction of the first connecting member 13 through the worm 21 and the worm wheel portion 16. Accordingly, the second connecting member 17 moves the control cable 4 to rotate the manual plate lever 51 and operate the mode shift unit 500, thereby shifting the operation modes of the automatic transmission 5.

Note that when the select lever 11 is moved at normal operating speed, the projection 171 is not in contact with the wall portions 13a and 13b of the opening 131 and therefore the second connecting member 17 can not be mechanically moved by the first connecting member 13. However, the second connecting member 17 is moved by the motor 2 based on the relative displacement ΔA between the first and second connecting members 13 and 17 to reduce their relative displacement ΔA, so that the second connecting member 17 rotates to follow the first connecting member 13. This following of the second connecting member 17 makes the manual plate lever 51 rotate through the cable 4, thereby shifting the operation modes of the mode shift unit 500.

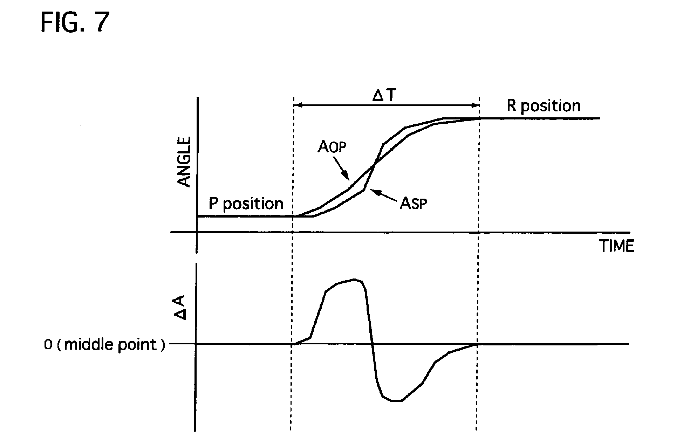

FIG 7 shows a time chart of relationships between an operating angle A_{OP} of the first connecting member 13, an assist angle A_{SP} of the second connecting member 17, and a relative displacement ΔA between them when the select lever 11 is shifted from the P position to the R position. Note that the level of the relative displacement ΔA shown in the lower part of FIG. 7 is illustrated to scale up in a vertical axis direction in comparison with that shown in the upper part of FIG 7.

As shown in the upper part of FIG 7, the operating angle A_{OP} and the assist angle A_{SP} have the same angle, which means that the relative displacement ΔA is zero, before a select operation. During the select operation period ΔT, the operating angle A_{OP} is kept to change by the driver, and the assist angle A_{SP} is also kept to change by the motor 2. At first stage of the operation period ΔT, the assist angle ASP follows the operating angle A_{OP}, then the assist angle A_{SP} advances than the operating angle A_{OP}, and they become the same angle at last. This accordance of the angles A_{OP} and A_{SP} is kept after the select operation as long as the select device 1 is in a normal state.

That is, at first, the first connecting member 13 advances then the second connecting member 17 due to non-contact of the wall portion 13a or 13b and the projection 171. Then, the relative displacement ΔA between them is detected. The motor 2 drives and increases the assist angle A_{SP} of the second connecting member 17 to follow the first connecting member 13, such that the projection 171 pursues the middle point Pm. Then, the assist angle A_{SP} advances then the operating angle A_{OP} of the first connecting member 13 due to the detent force caused by a slope portion of the cam profile. Consequently, this motor drive moves the second rotatble member 17 to decrease the relative displacement ΔA by lessening the drive command value TM so as to become the relative displacement ΔA to be zero.

During the normal select operation (an operation when the lever 11 is moved at normal select speed and his or her motor vehicle is on a substantially flat road), the manual plate lever 51 is operated by the motor 2 according to a movement of the select lever 11 without mechanical contact between the projection 171 and the wall portions 13a and 13b of the opening 131, as if they were directly connected with each other through the control cable 4. Thus, this operation can be performed without impact shock due to the mechanical contact of the first and second connecting members 13 and 17, providing a smooth operating feeling to the driver.

This operating feeling, therefore, depends on checking force produced by the detent mechanism 510. A profile of the cam 530 and force of the spring plate 54 may be set so that it can provide a lightly operatable feeling for moving the select lever, even when it is shorter than the conventional one.

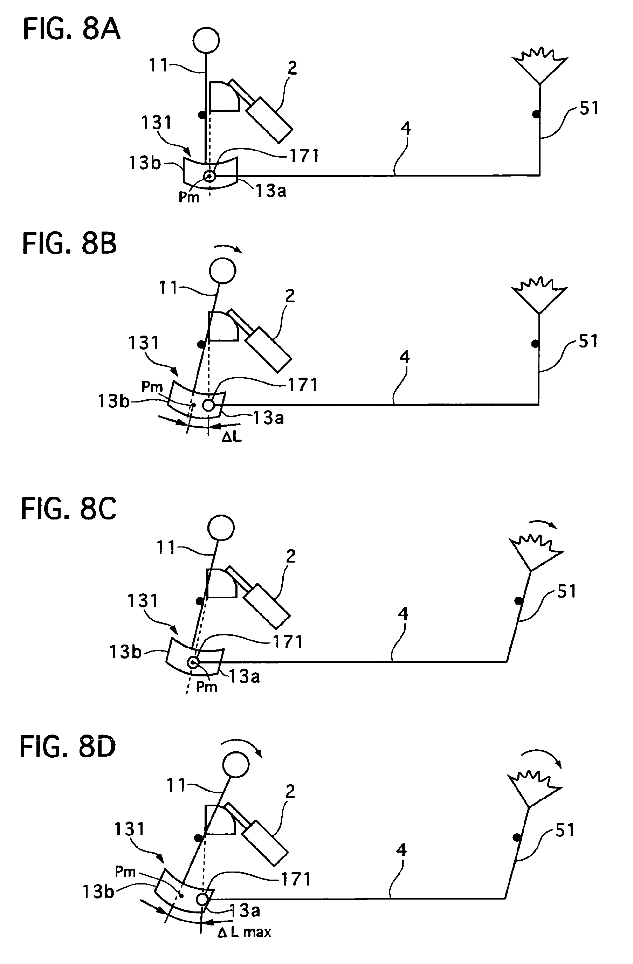

FIGS. 8A to 8D are schematic diagrams showing successive states of the select lever 11 and the manual plate lever 51 of the mode shift unit 500 in a select operation. The select lever 11 is mechanically linked to the first connecting member 13 and moves together with the play opening 131, while the manual plate lever 51 is mechanically linked to the projection 171 of the second connecting member 17.

As shown in FIG. 8A, the projection 171 is positioned at the middle point Pm of the play opening 131 and the motor 2 rests before the select operation, since their relative displacement is substantially zero.

Then, as shown in FIG. 8B, the middle point Pm advances relative to the projection 171 by a relative displacement ΔA due to a movement of the select lever 11 by the select operation. This relative displacement during the normal select operation is detected by using the sensors 61 and 62, and the motor 2 is controlled to drive the projection 171 so as to decrease the displacement, accordingly the projection 171 following the middle point Pm. In this normal select operation, the projection 171 is not in contact with the wall portion 13a or 13b of the play opening 131.

Then, as shown in FIG 8C, the projection 172 is positioned at the middle point Pm which shifts from the middle point shown in FIG 8A, where the motor 2 rests, since the relative displacement becomes substantially zero. This state is kept after the select operation.

On the other hand, the movement of the first and second connecting members 13 and 17 in an abnormal select operation, such as a select operation on a steep slope or at a high select-speed is different from that in the normal select operation.

First, the select operation of the select device 1 on the steep slope will be described.

When a driver intends to start his or her motor vehicle on a steep slope and operates the select lever 11 from the P position to the D position, its operating force becomes heavier than that of a select operation on a flat road. This results from increase of engaging force between the parking wheel 58 and the parking pawl 57, which becomes larger due to weight of the vehicle on the slope in the P position. Consequently, the parking rod 56 connected with the detent plate 53 needs larger force to be pulled out of its parking position by the select operation. This means that a large load acts on the second connecting member 17, so that the member 17 is hard to move.

Therefore, in this select operation on the steep slope, the wall portion 13a of the first connecting member 13 contacts directly with the projection 171 of the second connecting member 17, eliminating their clearance and mechanically transmitting operating force, which inputted to the lever 11 and the first connecting member 13, to the second connecting member 17. The second connecting member 17 moves the cable 4 to rotate the manual plate lever 51, and this lever 51 pulls the parking rod 56 out of its parking position through the detent plate 53.

FIG 8D shows this state, where the projection 171 moves to the maximum relative displacement ΔAmax and contacts with the wall portion 13a.

In this operation, a relative displacement ΔA between the members 13 and 17 is detected by using the relative angle sensor 6, so that the motor 2 actuates to apply its assist force to the second connecting member 17 in addition to the operating force inputted from the select lever 14 through the mechanical contact between the members 13 and 17. This motor assist force decreases the operating force of the driver to move the lever 11, accordingly producing a favorable feeling due to light operating force. Conversely, addition of the mechanical transmission of the operating force can lessen a rating of the motor 2 at that additional rate, which allows the operating position select device 1 to be reduced in size and weight.

Next, a high speed select operation of the select device 1 will be described.

When a driver moves the select lever 11 rapidly, the motor 2 can not generate its assist force immediately. Therefore, the wall portion 13a of the first connecting member 13 contacts directly with the projection 171 of the second connecting member 17, eliminating their clearance and mechanically transmitting operating force from the select lever 11 to the second connecting member 17. This state is similar to the state shown in FIG 8D.

The relative displacement ΔA between the members 13 and 17 is detected, so that the motor 2 actuates to apply its assist force to the second connecting member 17 in addition to the operating force inputted by the lever 14 through the mechanical contact between the members 13 and 17. The assist force is set larger than that in the normal select operation.

Then, the second connecting member 17 moves the cable 4 to rotate the manual plate lever 51 and pull the parking rod 56 out of its parking position through the detent plate 53. Therefore, in this case, the advantages can be obtained similarly to those in the select operation on the steep slope.

On the other hand, even when the motor 2, the control unit 3, the sensor 6 is electrically in trouble, the driver can shift the mode shift unit 500 by applying his or her operating force to the select lever 11. This causes mechanical contact of the wall portion 13a or 13b of the first connecting member 13 and the projection 171 of the second connecting member 17 to transmit the operating force directly to the second connecting member 17. In this case, the motor 2 can not actuate, but the mode shift unit 500 can be shiftable directly by driver's operating force, although its operating force becomes larger than that in a normal case. Therefore, the driver can surely shift the operation modes of the automatic transmission 5 even in an electrical failure of the operating position select device 1.

Incidentally, an output deviation is occasionally generated by the relative angle sensor 6 due to an error for fitting the cable 4 to the attachment portion 17a or the manual plate lever 51, elongation of the cable 4, or loosening of a nut adjusting tension of the cable 4.

An operation of power supply when the ignition key is turned on will be described.

When the driver turns on the ignition key, power from the battery supplies electric current to correspondent on-board units before the engine starts. An engine mounted on a motor vehicle with an automatic transmission is designed to start only in the P position or the N position, and accordingly a select operation is performed prior to an engine start. Therefore, in this embodiment, the assist control can be executed after the ignition key is turned on regardless of the engine start.

The select device 1 of the embodiment is constructed so that it can detect start-up of the select operation and start the assist control after the turn-on of the ignition key.

Consequently, when the select lever 11 is moved from its original selected position prior to the turn-on of the ignition key, for example when the driver turns on the key after putting his or her hand on the knob 12 of the lever 11, a relative displacement change between the connecting members 13 and 17 may occur and is detected, so that there is possibility of a judgment of the start-up based on the relative displacement or its displacement speed. This sometimes brings the motor 2 to drive and shift the select positions by mistakes. Although the lever 11 is applied by check force from the checking mechanism 14, the check pin 141 moves from the bottom portion 142a toward the top portion, because the first connecting member 13 is free from the second connecting member 17 in the play range formed by the projection 171 and the wall portions 13a and 13b of the play opening 131. There may be possibility of contact of the projection 171 and the wall portion 13a or 13b, where the maximum assist force may be supplied.

In order to avoid such problems, the select device of the embodiment changes the start-up threshold value according to the state of the ignition.

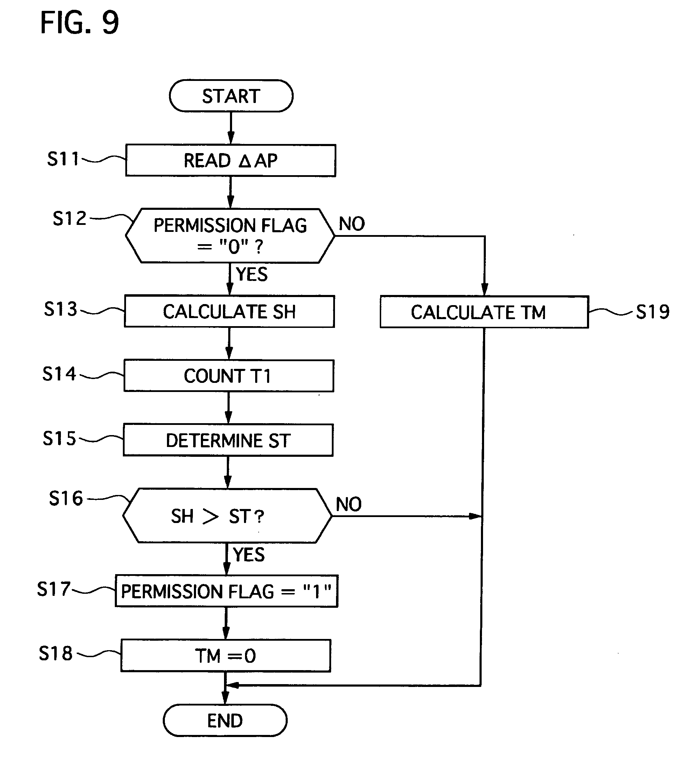

FIG 9 shows a flowchart of a start-up threshold value setting process executed by the control unit 3.

At step S11, the relative angle sensor 6 detects a relative angle ΔAP, the flow goes to step S12.

At the step S12, the drive permitting part 35 judges whether or not a permission flag is zero. If YES, the flow goes step S13, while, if NO, it goes to step S19. The permission flag is set to be zero in a state of prohibition against drive of the motor 2, while it is set to be 1 in a state of permission for the drive.

At the step S13, the high pass filter 33 passes only high-frequency components SH of the relative angle signal, and then the flow goes to step S14.

At the step S14, a timer of the start-up threshold value setting part 36 counts up time T1 when the ignition state detecting part 72 detects a shift from an OFF state to an ON state of the ignition key, and then, the flow goes to step S 15.

At the step S15, the start-up threshold value setting part 36 determines a set-up threshold value ST based on the time T1, which will be described in detail later, and then the flow goes to step S16.

At the step S16, the comparator 34 judges whether or not the high-frequency components SH are larger than the set-up threshold value ST. If YES, the flow goes to step S 17, while, if NO, it ends.

At the step S17, the drive permitting part 35 sets the permission flag to be 1 so as to keep a permission state of the drive of the motor 2, and then the flow goes to step S 18.

At the step S 18, the permitting part 35 sets the drive command value TM to be zero, and then the flow ends.

At the step S19, the drive command value calculating part 32 calculates a drive command value TM based on the relative displacement ΔA, and then the flow ends.

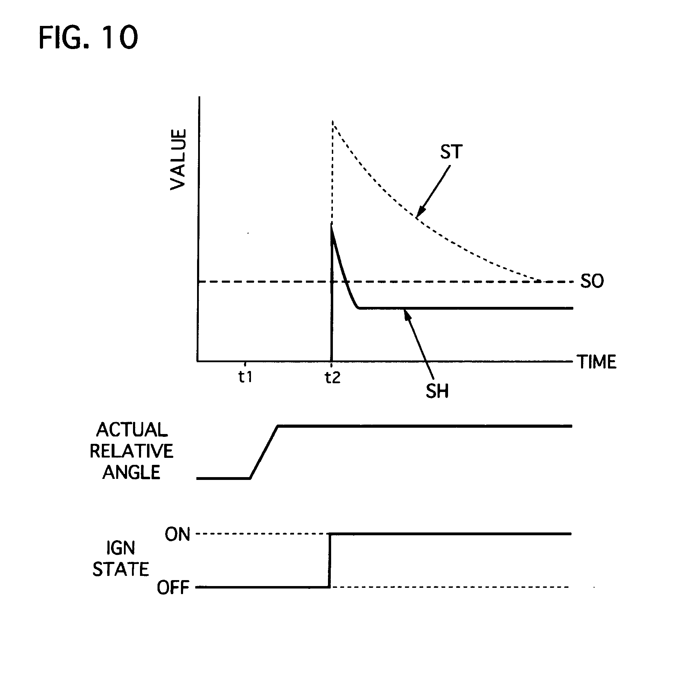

FIG 10 is a time chart showing values of the stat-up threshold values and the high-frequency components of the detected relative displacement, an actual relative angle between the first and second connecting members 13 and 17 and the ignition state.

As shown in FIG. 10, the knob 12 of the lever 11 is sometimes touched by the driver without intention of shifting it instantly in advance of ON of the ignition key, as shown at time of t1, since the lever 11 requires to be kept in the P position or the N position to supply the power by turn-on of the key. This touch of the knob 12 may move the first connecting member 13 relative to the second connecting member 17 to cause an actual relative angle between them. This actual relative angle is not so large as that in a select operation.

This active relative angle is not detected until the key is turned on because the relative angle sensor 6 and the control unit 3 are not supplied with the power. At time of t2, the key is turned on to change the ignition state from the OFF state to the ON state, which starts the timer 36a to count the time T1. At the same time, the start-up threshold value setting part 36 starts to set the start-up threshold value ST according to the time T1 so that the value ST, indicated by a slight dashed line, is raised to be larger than the normal start-up threshold value SO, indicated by a thick dashed line, and then gradually decreased to the normal value SO according to the time T1.

The comparator 34 compares the high-frequency part SH, indicated by a thick solid line, of the relative angle and the start-up threshold value ST. In this case, the comparator 34 outputs the comparative result signal for prohibiting the drive of the motor 2, since the part SH is smaller than the value ST although the part SH of the relative angle may be larger than the normal threshold value SO. This avoids a shift of the select positions due to a wrong drive of the motor 2.

Incidentally, when the ignition key is turned on before the lever 11 is touched, the start-up threshold value ST is raised at its top level before the actual relative angle increases. At the time when the lever 11 is touched, the actual relative angle may increase and be detected by the sensor 6, the value ST becomes smaller than that in the former case, providing higher response of the motor drive due to the select operation.

Then, when the high-frequency part SH becomes equal to or exceeds the value ST, the relative displacement ΔA is detected and used for driving the motor 2.

On the other hand, the alarm judging part 38 outputs the alarm signal to the alarm 73 to alert the driver when the drive of the motor 2 is permitted in a period where the value ST exceeds the normal value SO. By this alerting, the driver can identify his operation, a shifting operation or only a hand touch, and avoid a miss-shift.

This operating position select device 1 of the first embodiment has many advantages described below.

The select lever 11 can be shorter than a conventional one by approximately 150 mm at its portion projecting from a center console toward a passenger compartment without increasing an operating force applied to the select lever 11 so much. This brings a design freedom concerning an installation location of the select lever and/or a layout of a passenger compartment to be broadened.

When operating the select lever 11, assist force from the electric motor 2 is applied to the second connecting member 17 connected with the control cable 4 and the manual plate lever 51, which can reduce the operating force applied to the select lever 11. In the normal select operation, at normal select-speed and on a substantially flat road, the first and second connecting members 13 and 17 does not contact with each other, and the second connecting member 17 is driven to follow the first connecting member 13, which enables a driver to move the select lever 11 with a light force and have a comfortable operating feeling. On the other hand, in a different select operation, such as at high select-speed or on a steep slope, the wall portion 13a or 13b and the projection 171 contact with each other to directly transmit the operating force from the select lever 11 to the mode shift unit 500 in addition to assist force outputted from the motor 2. This enables the motor 2 to be in a small size.

This select device 1 is highly robust, because the projection 171 can easily move relative to the wall portions 13a and 13b of the play opening 131 when setting errors, manufacturing errors or age change occurs.

When the operating position select device 1 fails electrically, a driver can shift the mode shift unit 500 by operating the select lever 11; because the wall portion 13a or 13b and the projection 171 contact with each other, and thereby the select lever 11 and the mode shift unit 500 are mechanically connected to transmit the operating force from the select lever 11 to the mode shift unit 500.

The relations among the parts can be easily adjusted since the first and second connecting members 13 and 17 are not directly connected with each other.

The start-up threshold value setting part 36 increases the start-up threshold value ST to be larger than the normal start-up threshold value SO when the ignition key is turned on, which prevents a miss-shift of the select lever 11 against a driver's intention.

The high pass filter 33 has a gain larger than zero to pass the high-frequency part of the relative angle, which ensures the assist control even when the select lever 11 is operated slowly.

The alarm 73 alerts a driver when the assist control starts while the start-up threshold value becomes larger than the normal value, which prevents a miss-shift of the lever 11 by the driver.

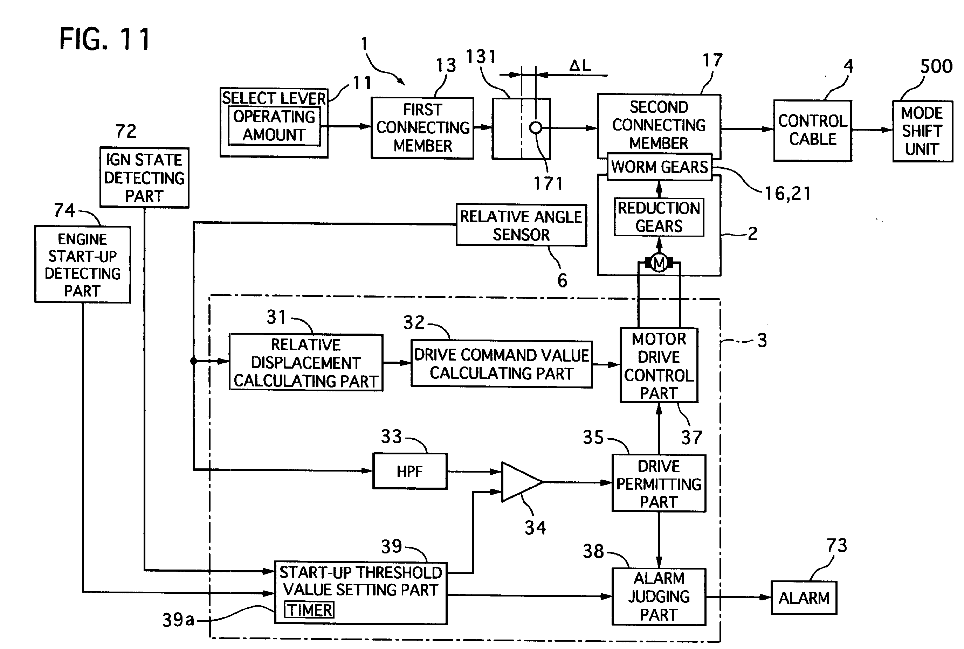

Next, an operating position select device of a second embodiment according to the present invention will be described with reference to the accompanying drawings of FIGS. 11 to 13.

Referring to FIG. 11, this operating position select device is constructed similarly to that of the first embodiment shown in FIGS. 1 to 4 except addition of an engine start-up detecting part 74 and modification of a start-up threshold value setting part 39 of a control unit 3.

The engine start-up detecting part 74 is separated from the control unit 3 and placed in a passenger compartment. The detecting unit 74 detects an engine start-up based on activation of a stator motor or time reaching a predetermined idle speed of an engine, for example and outputs an engine start-up signal. A signal which is outputted from an engine control unit or the like and indicates the engine start-up can be used as the engine start-up signal of the detecting part 74, which is desirable to remove an additional sensor. The engine start-up detecting part 74 acts as an engine start-up detecting means of the present invention.

The start-up threshold value setting part 39 is electrically connected to the engine start-up detecting part 74 and an ignition state detecting part 72 to receive the engine start-up signal and an ignition state signal, respectively, and outputs a start-up threshold value signal. The setting part 39 is provided with data tables of start-up threshold values and a timer 39a for counting time when it receives an ignition state signal indicating turn-on of an ignition key. The start-up threshold value is set based on the time so that it keeps a larger value until power supply becomes ON and the engine starts, and then becomes lower gradually to a normal start-up threshold value. The start-up threshold value setting part 39 acts as a start-up threshold value setting means of the present invention.

The other parts of the operating position select device of the second embodiment are similar to those of the first embodiment.

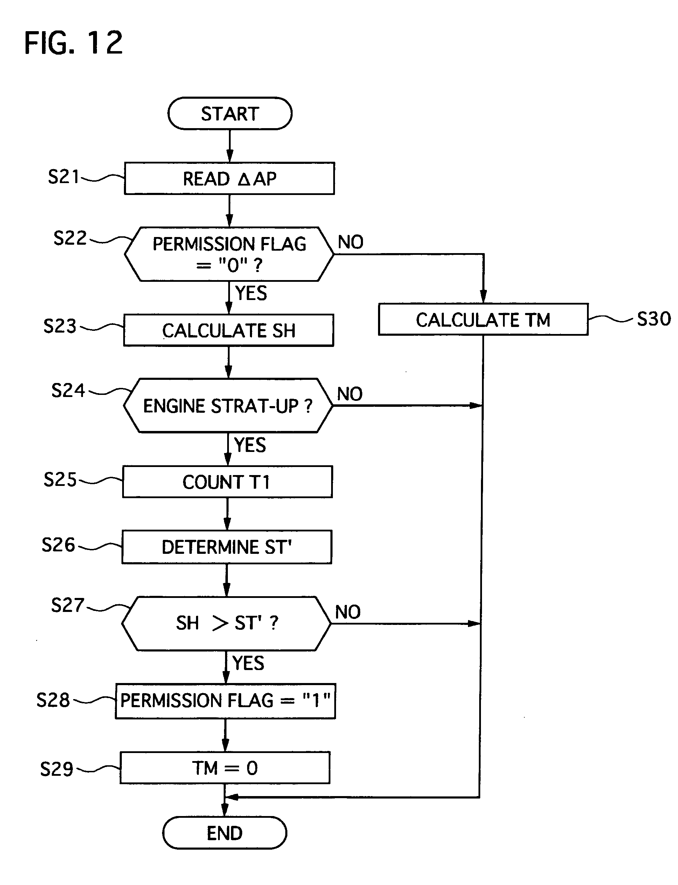

FIG. 12 is a flowchart of a start-up threshold value setting process executed by the control unit 3.

At step S21, a relative angle sensor 6 detects a relative angle ΔAP, the flow goes to step S22.

At the step S22, a drive permitting part 35 judges whether or not a permission flag is zero. If YES, the flow goes to step S23, while, if NO, it goes to step S30. The permission flag is set to be zero in a state of prohibition against drive of an electric motor 2, while it is set to be 1 in a state of permission for the drive.

At the step S23, a high pass filter 33 passes only high-frequency components SH of the relative angle signal, and then the flow goes to step S24.

At the step S24, the start-up threshold value setting part 39 receives an engine start-up signal from the engine start-up detecting part 74 and judges whether or not the engine is started. If YES, the flow goes to step S25, while, if NO, it ends.

At the step S25, a timer of the start-up threshold value setting part 39 counts up time T1 when the ignition state detecting part 72 detects a shift from an OFF state to an ON state of the ignition key, and then, the flow goes to step S26.

At the step S26, the start-up threshold value setting part 39 determines a set-up threshold value ST' based on the time T1, which will be described in detail later, and then the flow goes to step S27.

At the step S27, a comparator 34 judges whether or not the high-frequency components SH are larger than the set-up threshold value ST'. If YES, the flow goes to step S28, while, if NO, it ends.

At the step S28, a drive permitting part 35 sets the permission flag to be 1 so as to keep a permission state of the drive of the motor 2, and then the flow goes to step S29.

At the step S29, the permitting part 35 sets the drive command value TM to be zero, and then the flow ends.

At the step S30, the drive command value calculating part 32 calculates a drive command value TM based on a relative displacement ΔA outputted from a relative displacement calculating part 31, and then the flow ends.

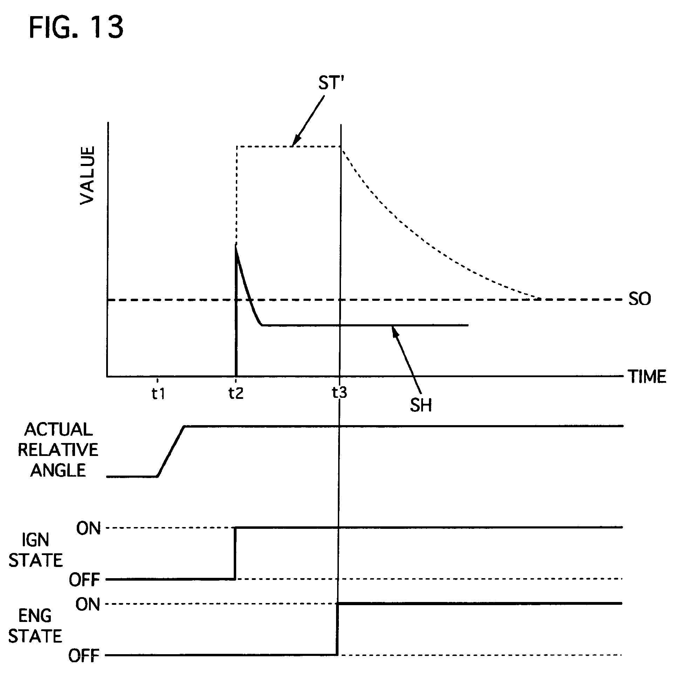

FIG. 13 is a time chart showing values of the stat-up threshold values and the high-frequency components of the detected relative displacement, an actual relative angle between the first and second connecting members, the ignition state and the engine state.

This threshold value setting is similar to that of the first embodiment shown in FIG 10 except allowing for the engine state. The operation until time of t2 is the same to that of the first embodiment, while the start-up threshold value ST' is kept at its top level from the time of t2 to time of t3, when the engine is started, and after the time of t3 the value ST' is decreased to the normal threshold value SO.

The other operations are similar to those of the first embodiment.

The operating position select device of the second embodiment has the following advantages in addition to those of the first embodiment explained above.

The start-up threshold value ST is kept at its top level after the turn-on of the ignition key to the start of the engine, which can prevent a miss-shift of the select lever 11 against a driver's intention. Sometimes the engine is started when a long time passes after the turn-on of the ignition key, but the top level of the start-up threshold value ST is kept until the engine start to prevent the miss-shift certainly.

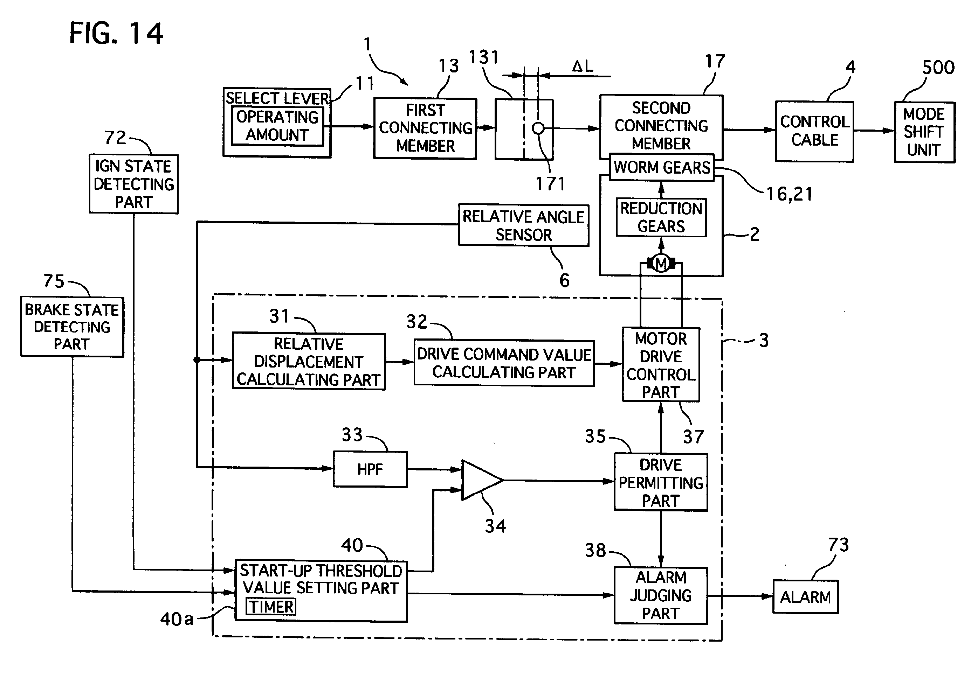

Next, an operating position select device of a third embodiment according to the present invention will be described with reference to the accompanying drawings of FIGS. 14 to 17.

Referring to FIG. 14, this operating position select device is constructed similarly to that of the first embodiment shown in FIGS. 1 to 4 except addition of a brake stare detecting part 75 and modification of a start-up threshold value setting part 40 of a control unit 3.

The brake stare detecting part 75 is separated from the control unit 3 and placed in a passenger compartment. The detecting unit 75 detects application of the brakes based on brake pressure, activation of a brake wheel cylinder, or a signal indicating brake ON outputted from Antiskid Brake System (ABS) controller, and outputs a brake state signal. The brake stare detecting part 75 acts as brake stare detecting means of the present invention.

The start-up threshold value setting part 40 is electrically connected to the brake state detecting part 75 and an ignition operating part 72 to receive the brake state signal and an ignition state signal, and outputs a start-up threshold signal. The setting part 40 is provided with data tables of start-up threshold values and a timer 40a for counting time when it receives an ignition state signal indicating turn-on of an ignition key. The start-up threshold value is set based on the time so that it keeps a larger value when power supply becomes ON and its larger value lessens to return to a normal start-up threshold value sooner when the brake is in an ON state. The start-up threshold value setting part 40 acts as a start-up threshold value setting means of the present invention.

The other parts of the operating position select device of the third embodiment are similar to those of the first embodiment.

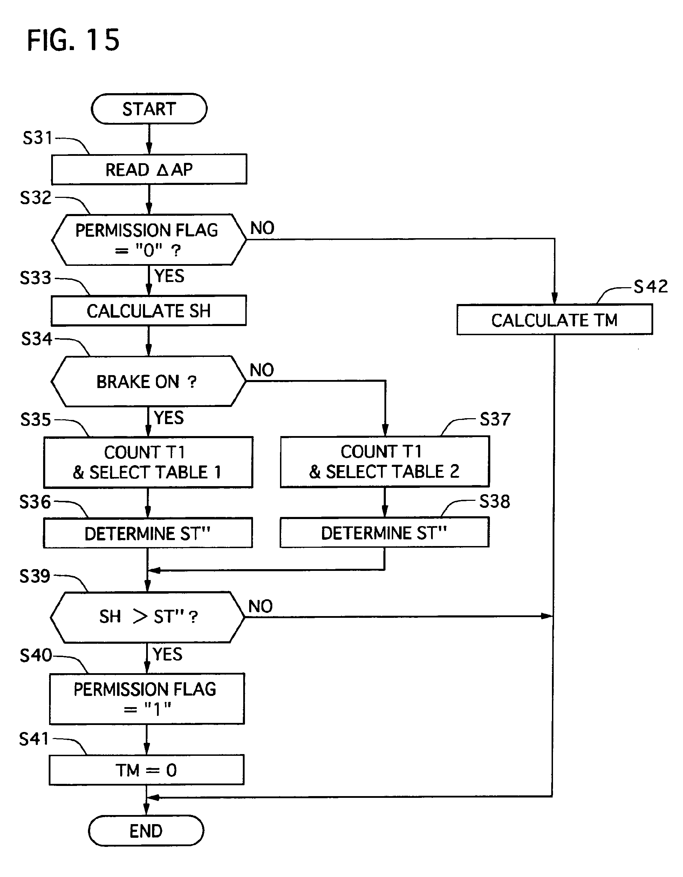

FIG 15 is a flowchart of a start-up threshold value setting process executed by the control unit 3.

At step S31, a relative angle sensor 6 detects a relative angle ΔAP, the flow goes to step S32.

At the step S32, a drive permitting part 35 judges whether or not a permission flag is zero. If YES, the flow goes step S33, while, if NO, it goes to step S42. The permission flag is set to be zero in a state of prohibition against drive of an electric motor 2, while it is set to be 1 in a state of permission for the drive.

At the step S33, a high pass filter 33 passes only high-frequency components SH of the relative angle signal, and then the flow goes to step S34.

At the step S34, the start-up threshold value setting part 40 receives an engine start-up signal from the brake state detecting part 75 and judges whether or not the brake is applied. If YES, the flow goes to step S35, while, if NO, it goes to step S37.

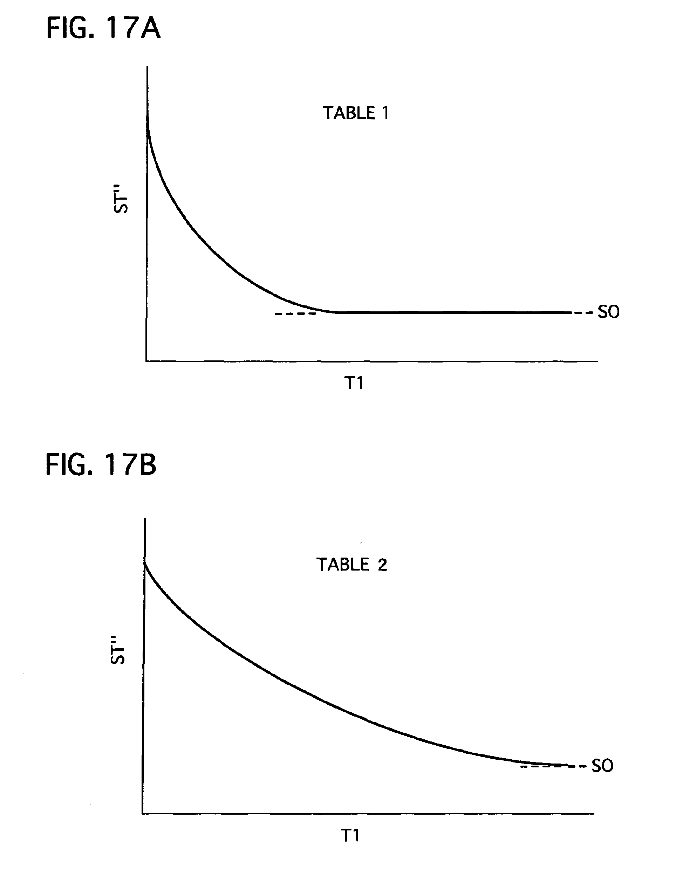

At the step S35, a timer 40a counts up time T1 when the ignition state detecting part 72 detects a shift from an OFF state to an ON state of the ignition key, and also selects a data TABLE 1 shown in FIG 17A, and then, the flow goes to step S36.

At the step S36, the setting part 40 determines the start-up threshold value ST", and then the flow goes to step S39.

At the step S37, a timer 40a counts up time T1 when the ignition state detecting part 72 detects a shift from an OFF state to an ON state of the ignition key, and also selects a data TABLE 2 shown in FIG. 17B, and then, the flow goes to step S38.

At the step S38, the setting part 40 determines the start-up threshold value ST", and then the flow goes to step S39.

At the step S39, a comparator 34 judges whether or not the high-frequency components SH are larger than the set-up threshold value ST". If YES, the flow goes to step S40, while, if NO, it ends.

At the step S40, a drive permitting part 35 sets the permission flag to be 1 so as to keep a permission state of the drive of the motor 2, and then the flow goes to step S41.

At the step S41, the permitting part 35 sets the drive command value TM to be zero, and then the flow ends.

At the step S42, the drive command value calculating part 32 calculates a drive command value TM based on a relative displacement ΔA outputted from a relative displacement calculating part 31, and then the flow ends.

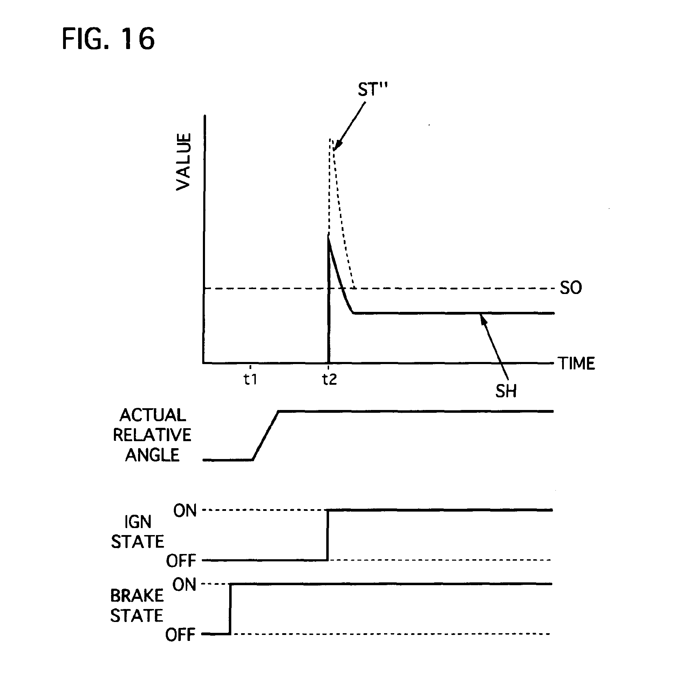

FIG 16 is a time chart showing values of the stat-up threshold values and the high-frequency components of the detected relative displacement, an actual relative angle between the first and second connecting members, the ignition state and the brake state.

This threshold value setting is similar to that of the first embodiment shown in FIG 10 except allowing for the brake state. The operation until time of t2 is the same to that of the first embodiment, while the start-up threshold value ST" is raised to its top level at the time of t2 but decreased to the normal threshold value SO more rapidly than those of the first and second embodiments because the brake is applied in advance of the time t2 and kept its state from then.

FIG 17A and FIG 17B show TABLE 1 and TABLE 2 for determining the start-up threshold value based on the time T1 counted by the timer 40a. The TABLE 1 is used when the brake is applied, and the TABLE 2 is used when the brake is released. Both of the start-up threshold values of the TABLES 1 and 2 are set to decrease to the normal start-up threshold value SO according to increase of the time T1, where the value of the TABLE 1 decreases more rapidly than that of the TABLE 2.

The other operations are similar to those of the first embodiment.

The operating position select device of the third embodiment has the following advantages in addition to those of the first embodiment explained above.

The start-up threshold value ST is decreased rapidly when the brake is applied, which avoids a miss-shift control against a driver's intention to shift the select lever 11, providing a quick response of the select operation when the driver desires.

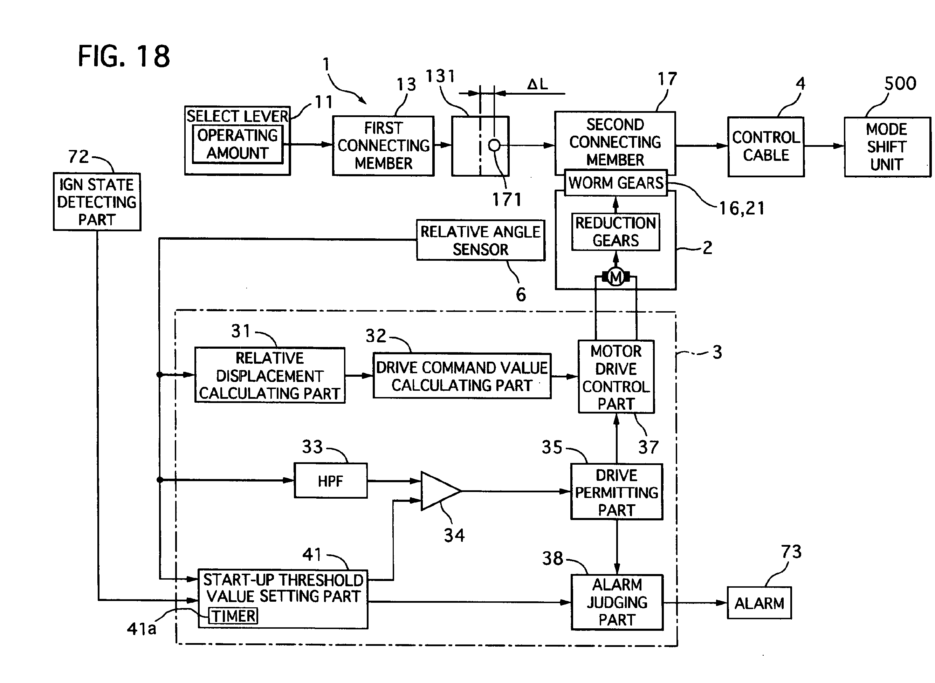

Next, an operating position select device of a fourth embodiment according to the present invention will be described with reference to the accompanying drawings of FIGS. 18 to 20.

Referring to FIG. 18, this operating position select device is constructed similarly to that of the first embodiment shown in FIGS. 1 to 4 except a start-up threshold value setting part 41 of a control unit 3.

The select device has a relative angle sensor 6 and an ignition state detecting part 72, which are constructed similarly to those of the first embodiment.

The start-up threshold value setting part 41 is electrically connected to the relative angle sensor 6 and the ignition state detecting part 72 to receive a relative angle signal and an ignition state signal, respectively, and outputs a start-up threshold signal. The setting part 41 is provided with data tables of start-up threshold values and a timer 41 a for counting time when it receives an ignition state signal indicating turn-on of an ignition key.

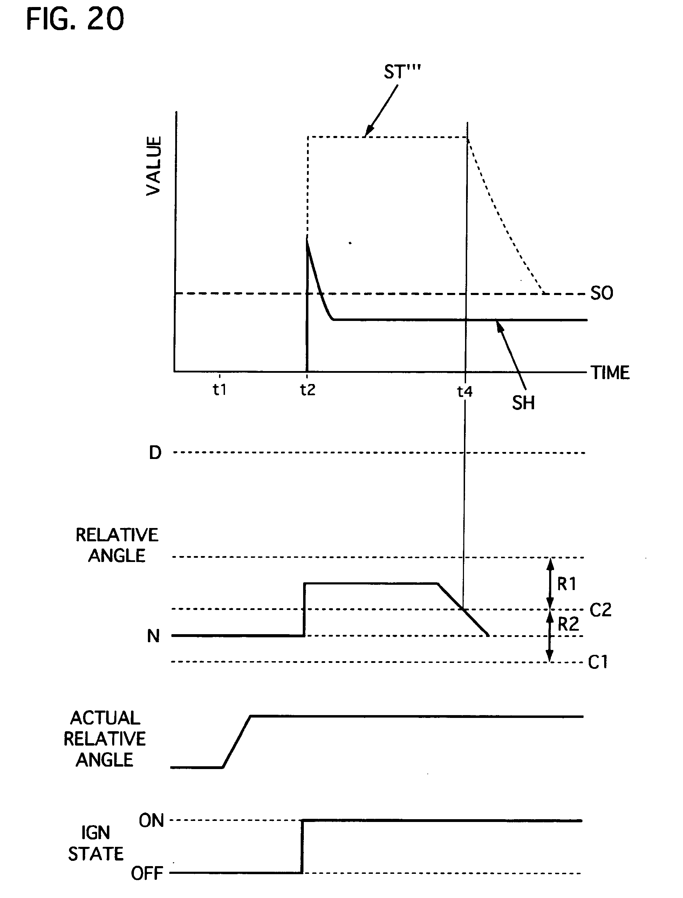

The start-up threshold value is set based on the time and the relative angle ΔAP so that it keeps a larger value when power supply becomes ON and the detected relative angle is out of a predetermined range R2 defined by the minimum angle C1 and the maximum angle C2 as shown in FIG 20, and then its value lessens to return to a normal start-up threshold value after the relative angle is within the range R2. The angles C1 and C2 are set based on a check mechanism, for example its cam profile, of a select lever unit such that the relating angle ΔAP in the range R2 is obtained when the driver touches the lever 11 but it is not sure whether he or she intends to shift the select positions.

The start-up threshold value setting part 41 acts as a start-up threshold value setting means of the present invention.

The other parts of the operating position select device of the fourth embodiment are similar to those of the first embodiment.

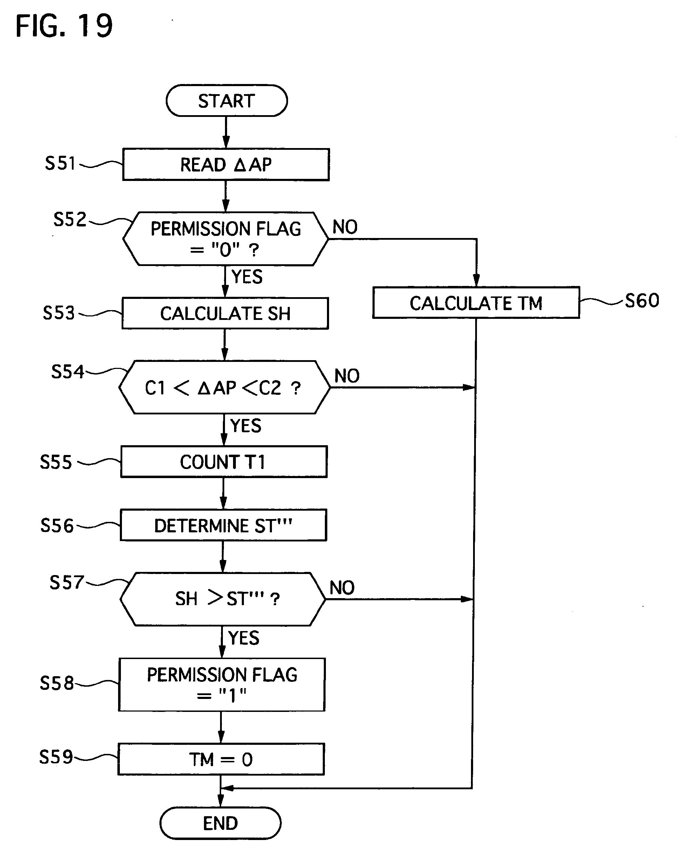

FIG 19 is a flowchart of a start-up threshold value setting process executed by the control unit 3.

At step S51, the relative angle sensor 6 detects a relative angle ΔAP, the flow goes to step S52.

At the step S52, a drive permitting part 35 judges whether or not a permission flag is zero. If YES, the flow goes step S53, while, if NO, it goes to step S60. The permission flag is set to be zero in a state of prohibition against drive of an electric motor 2, while it is set to be 1 in a state of permission for the drive.

At the step S53, a high pass filter 33 passes only high-frequency components SH of the relative angle signal, and then the flow goes to step S35.

At the step S54, the start-up threshold value setting part 40 receives a relative angle signal and judges whether or not the relative angle ΔAP is within the predetermined range R2. If YES, the flow goes to step S55, while, if NO, it ends.

At the step S55, a timer 40a counts up time T1 when the ignition state detecting part 72 detects a shift from an OFF state to an ON state of the ignition key, and then, the flow goes to step S56.

At the step S56, the setting part 40 determines the start-up threshold value ST"', and then the flow goes to step S57.

At the step S57, a comparator 34 judges whether or not the high-frequency components SH are larger than the set-up threshold value ST"'. If YES, the flow goes to step S58, while, if NO, it ends.

At the step S58, a drive permitting part 35 sets the permission flag to be 1 so as to keep a permission state of the drive of the motor 2, and then the flow goes to step S59.

At the step S59, the permitting part 35 sets the drive command value TM to be zero, and then the flow ends.

At the step S60, the drive command value calculating part 32 calculates a drive command value TM based on a relative displacement ΔA outputted from a relative displacement calculating part 31, and then the flow ends.

FIG 20 is a time chart showing values of the start-up threshold values and the high-frequency components of the detected relative displacement, an actual relative angle between the first and second connecting members, an ignition state and the detected relative angle.

This threshold value setting is similar to that of the first embodiment shown in FIG 10 except addition of allowing the relative angle. The operation until time of t2 is the same as that of the first embodiment, while the start-up threshold value ST"' is kept at a top level from the time of t2 to time of t4, when the relative angle comes within the range R2, and after the time of t4 the value ST"' is decreased to the normal threshold value SO.

The other operations are similar to those of the first embodiment.

The operating position select device of the fourth embodiment has the following advantages in addition to those of the first embodiment.

The start-up threshold value ST is kept at its top level until the relative angle becomes within the range R2, which can prevent a miss-shift of the select lever 11 against a driver's intention. On rare occasions, a driver keeps inputting his or her operating force to the select lever 11, but in this case, the top level of the start-up threshold value ST can be kept longer relative to that obtained by the first embodiment to ensure prevention of the miss-shift of the lever 11.

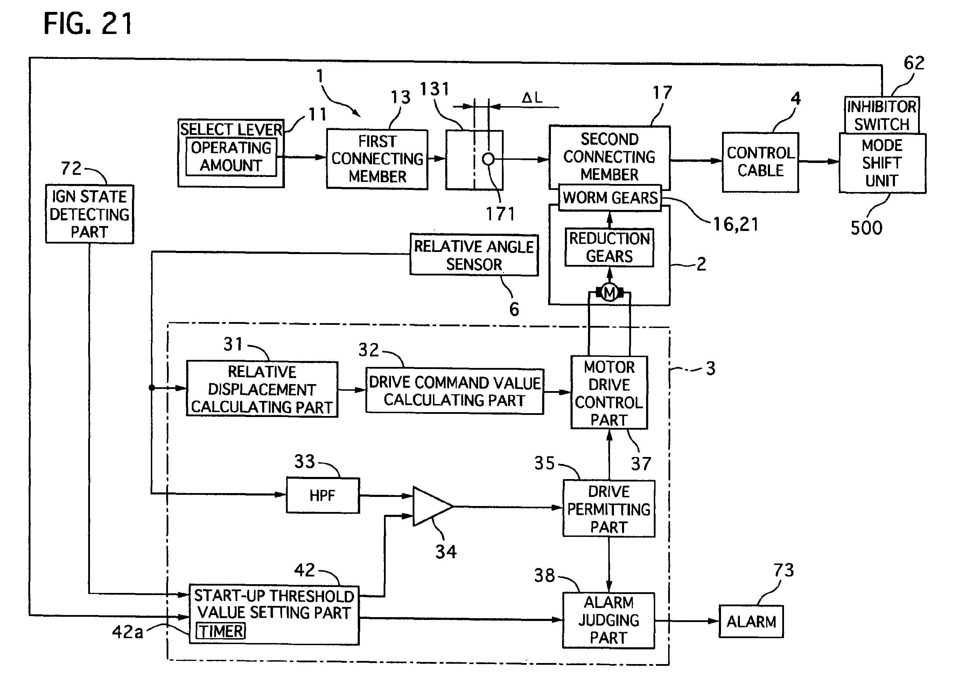

Next, an operating position select device of a fifth embodiment of the present invention will be described with reference to the accompanying drawings of FIG. 21.

Referring to FIG 21, this operating position select device is constructed similarly to that of the first embodiment shown in FIGS. 1 to 4 except addition of an inhibitor switch 62 and modification of a start-up threshold value setting part 42 of a control unit 2.

The inhibitor switch 62 detects a select position of a mode shift unit 500 and outputs a select position signal.

The start-up threshold value setting part 42 is electrically connected to the inhibitor switch 62 and ignition state detecting part 72 constructed similarly to that of the first embodiment to receive the select position signal and an ignition state signal. The setting part 42 is provided with a data table of start-up threshold values and a timer 42a for counting time when it receives an ignition state signal indicating turn-on of an ignition key. The start-up threshold value is set based on the time so that it keeps a larger value when power supply becomes ON and the inhibitor switch 62 detects an N position and the detected relative angle corresponds to that of the select operation from the N position toward the D position, and then its value lessens to return to a normal start-up threshold value. The start-up threshold value setting part 42 acts as a start-up threshold value setting means of the present invention.

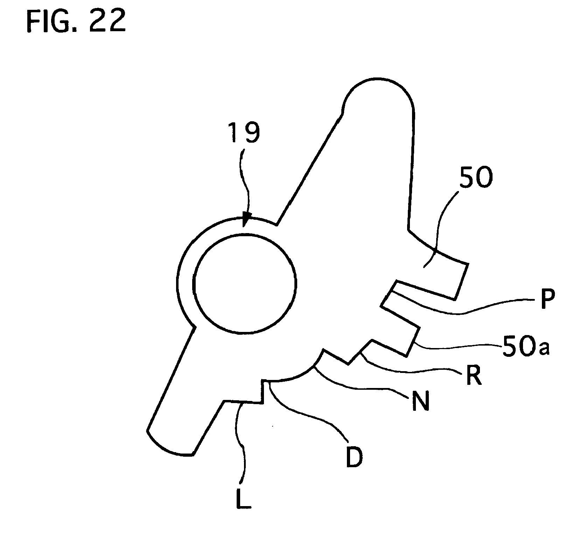

The select device of this embodiment has a select lever unit equipped with a select lever 11 and a gate mechanism. As shown in FIG 22, the gate mechanism includes a gate plate 50 provided on a supporting shaft 19 of the select lever unit. The gate plate 50 is formed with five grooves corresponding to a P position, an R position, the N position, the D position and an L position, which is engageable with a not-shown lock pin moved with the select lever 11 and operated by a driver. Specifically, the lock pin is operated in a radius direction of the supporting shaft 19 by pressing a button on a knob of the lever 11, thereby getting over a projection 50a between the grooves of the P and R positions.

Incidentally, an engine can be started in the P position or the N position. In the P position, the gate mechanism prohibits the lever 11 by the projection 50a from moving from the P position to the R position, while it does not prohibit the lever 11 from moving from the N position to the D position for an easy select operation, which may cause undesirable assist control to start a motor vehicle. Therefore, the start-up threshold value setting part 42 of this embodiment sets the start-up threshold value to be larger when the selected operation from the N position to the D position is detected.

The other parts of the operating position select device of the fifth embodiment are similar to those of the first and fourth embodiments.

In this embodiment, the start-up threshold value ST is set larger when the select lever 11 is moved from the N position toward the D position and the inhibitor switch 6 detects the N position after the turn-on of the ignition key to prevent a miss-shift of the lever 11 from the N position to the D position, while the other miss-shifts are prevented by using the gate mechanism.

The operating position select device of the fifth embodiment has the following advantages in addition to those of the first and fifth embodiments.

The start-up threshold value ST is set larger when the select lever 11 is moved from the N position toward the D position and the inhibitor switch 6 detects the N position after the ignition key is turned on, which can prevent a miss-shift of the lever 11 from the N position to the D position against a driver's intention.

Further, the selected position is detected by the inhibitor switch 62, used in the conventional automatic transmissions, which enables a manufacturing cost of the device to be suppressed.

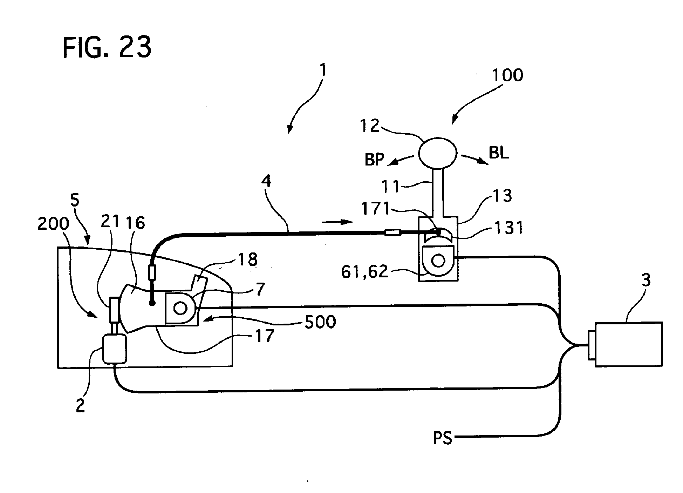

Next, an operating position select device of a sixth embodiment according to the present invention will be described with reference to the accompanying drawing of FIG 23.

In this select device of the sixth embodiment, an electric motor 2 and a second connecting member 17 are mounted on an automatic transmission 5.

Referring to FIG 23, this operating position select device is constructed similarly to that of the first embodiment shown in FIGS. 1 to 4 except the following elements.

A first connecting member 13 is integrally joined with a select lever 11 of a select lever unit 100 and provided with a play opening 131.

The second connecting member 17 is mounted on the automatic transmission 5 and has a worm wheel portion 16 in mesh with a worm 21 connected on an output shaft of an electric motor 2 mounted on the automatic transmission 5. This member 17 is integrally formed with a manual plate member 18 at its end portion.

A control cable 4 has a projection 171 inserted into the play opening 131 with clearances therebetween at its one end portion and is connected with the second connecting member 17 at its other end portion.

The other parts of the operating position select device of the sixth embodiment are similar to those of the first to fifth embodiments.

The operation and advantages of the select device 1 of the sixth embodiment are similar to those of the first to fifth embodiments. Further, the select lever unit 100 can be smaller than those of the embodiments, since the second connecting member 17 and the motor 2 are mounted on the automatic transmission 5.

Next, an operating position select device of a seventh embodiment according to the present invention will be described with reference to the accompanying drawings of FIG 22 and 23.

In this select device 1 of the sixth embodiment, the relative displacement is detected by a length, not by an angle in the fourth embodiment, and at a position between a first control cable 8a and a second control cable 8b which connect a select lever 11 with an actuator 9.

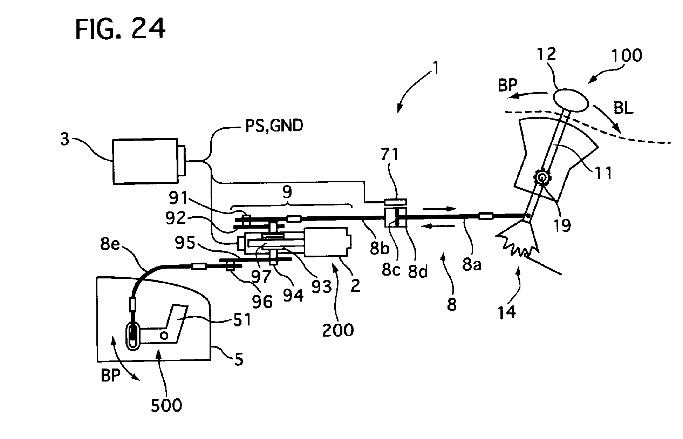

Referring to FIG 24 of the drawing, there is shown an automatic transmission 5 and an operating position select device 1 to control the transmission 5.

The operating position select device 1 includes a select lever unit 100 manually operated by a driver, a mode shift unit 500 mounted on the automatic transmission 5, a first control cables 8a, a second control cable 8b, and a third control cable 8e for transmitting operating force from the select lever 11 to the mode shift unit 500, the assist actuator 9, and a control unit 3 for controlling the assist actuator 9.

The select lever unit 100 is arranged, for example, at a center console 3 beside a driver's seat and has the select lever 11 operated by the driver and a checking mechanism 14 for ensuring the select lever 11 to be kept in a selected mode position.

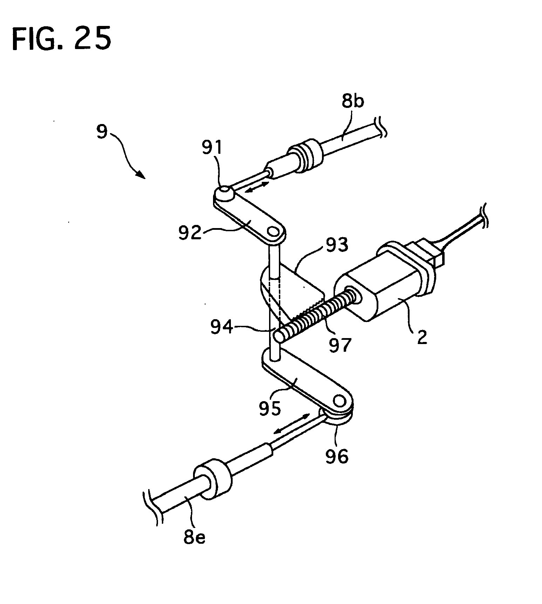

Referring to FIGS. 24 and 25, the assist actuator 9 includes an electric motor 2 with reduction gears for reducing rotation speed of its output shaft, a worm 97 formed on the output shaft, and a worm wheel 93 meshing with the worm 97 and integrally united to a coupling shaft 94. The coupling shaft 94 is integrally provided with the worm wheel 93 at its intermediate portion, a first plate 92 at its top end portion, and a second plate 95 at its bottom end portion.

The first control cable 8a is connected with a bottom portion of the select lever at its one end portion and a piston 8c at its other end portion. The second control cable 8b is connected with a cylinder 8d at its one end portion and the first plate 92 by a first pin 91 at its other end portion. The piston 8c is disposed slidably in the cylinder 8d to have clearances between wall portions of the cylinder 8d, so that the first control cable 8a can move relative to the second control cable 8b in a permissible range, where the piston 8c is not in contact with the wall portions of the cylinder 8d. The first and second control cables 8a and 8b moves together with each other to transmit operating force therebetween when the piston 8c is in contact with the wall portion of the cylinder 8d. The third control cable 8e is connected with the second plate 95 by a second pin 96 at its one end portion and a manual plate lever 51 at its other end portion.

There is provided a relative angle sensor 71 for detecting a relative angle between the piston 8c and a middle point of the inside of the cylinder 8d.

The operation and advantages of the select device 1 of the seventh embodiment are similar to those of the first to fifth embodiments. Further, the select lever unit 100 can be smaller than those of the embodiments, since the second connecting member 17 and the motor 2 are disposed between the select lever unit 100 and the automatic transmission 5.

While there have been particularly shown and described with reference to preferred embodiments thereof, it will be understood that various modifications may be made therein, and it is intended to cover in the appended claims all such modifications as fall within the true spirit and scope of the invention.

The first and second connecting members 13 and 17 may be located at a select lever unit, an automatic transmission, or an intermediate position between them.

The select lever 2 may be in a shape different from the above embodiments, and have a configuration different from that of the first embodiment shown in FIGS. 1 and 2, for example, a finger- controable one.

The configuration of the cam 530 of the detent mechanism 510 may be formed arbitrarily to have different target reaction force.

The relative displacement sensor of the present invention may detect a relative displacement amount different from the relative angle.

At least two of the start-up threshold value settings in the embodiments may be combined with each other.

## Claims

1. An operating position select device (1) for an automatic transmission (5) whose operation modes are shiftable, **characterized in that** the operating position select device (1) comprises:
a select lever unit (100) having a select lever (11) that is operated by a driver between a plurality of select positions corresponding to the operation modes;
a first connecting member (13) mechanically connected with and movable with the select lever (11);
a mode shift unit (500) mounted on the automatic transmission (5) to shift operation modes of the automatic transmission (5);
a second connecting member (17) mechanically connected with the mode shift unit (500) to shift positions thereof, the second connecting member (17) being relatively movable to a limit amount with respect to the first connecting member (13) and integrally movable beyond the limit amount with the first connecting member (13);
a relative displacement sensor (6) detecting a relative displacement between the first connecting member (13) and the second connecting member (17);
an ignition state detecting means (72) detecting turn-on of an ignition key;
an assist actuator (200, 2) supplying assist force to the mode shift unit (500);
a drive command value calculating means (32) calculating a drive command value for driving the assist actuator (200, 2) based on the relative displacement so that the relative displacement is reduced;
a drive permitting means (35) for permitting driving of the assist actuator (200, 2) when the relative displacement exceeds a start-up threshold value; and
a start-up threshold value setting means (36, 39, 40, 41, 42) setting the start-up threshold value so that the start-up threshold value is kept larger than a normal start-up threshold value for a predetermined period after the ignition state detecting means (72) detects the turn-on of the ignition key and then the start-up threshold value lessens to the normal start-up threshold value after the predetermined period.

2. An operating position select device (1) for an automatic transmission (5) according to claim 1, **characterized in that**
the start-up threshold value setting means (36, 39, 40, 41, 42) has a timer (36a, 39a, 40a, 41a, 42a) for counting time after the turn-on of the ignition key, and sets the start-up threshold value according to the time.

3. An operating position select device (1) for an automatic transmission (5) according to claim 1 or claim 2, **characterized in that** said device comprises
an engine start-up detecting means (74) detecting a start-up of an engine, wherein
the start-up threshold value setting means (39) sets the start-up threshold value to be kept larger than the normal start-up threshold value until the engine start-up detecting means (39) detects the start-up of the engine.

4. An operating position select device (1) for an automatic transmission (5) according to any one of claims 1 to 3, **characterized in that** said device further comprises
a brake state detecting means (75) detecting application of a brake, and that
the start-up threshold value setting means (40) sets the predetermined period to become shorter when the brake state detecting means (40) detects the application of the brake than the predetermined period when the brake is released.

5. An operating position select device (1) for an automatic transmission (5) according to any one of claims 1 to 4, **characterized in that**
the start-up threshold value setting means (41) sets the start-up threshold value to be kept larger than the normal start-up threshold value until the relative displacement is out of a predetermined range.

6. An operating position select device (1) for an automatic transmission (5) according to any one of claims 1 to 5, **characterized in that**
the setting of the start-up threshold value to be larger is performed only in a select operation from an N position to a D position.

7. An operating position select device (1) for an automatic transmission (5) according to any one of claims 1 to 6, **characterized in that**
an alarm (73) for alerting a driver when the assist actuator (200, 2) starts to drive during setting of the start-up threshold value to be larger.

8. An operating position select device (1) for an automatic transmission (5) according to any one of claims 1 to 7, **characterized in that** said device further comprises
a high pass filter (33) having gain larger than zero, wherein
a relative displacement signal outputted from the relative displacement sensor passes through the high pass filter (33) to the drive permitting means (35) to be compared with the start-up threshold value.
